## Europäisches Patentamt
## European Patent Office
## Office européen des brevets

(19)

(11) Veröffentlichungsnummer: **0 300 388 B1**

(12)

# EUROPÄISCHE PATENTSCHRIFT

(45) Veröffentlichungstag der Patentschrift: **23.09.92**

(21) Anmeldenummer: **88111456.5**

(22) Anmeldetag: **16.07.88**

(51) Int. Cl.5: **C08L 75/04**, C08G 18/08, C08G 18/28, C09D 175/04, C09J 175/04

(54) **Einkomponentige Polyurethansysteme mit viskositätsregulierenden Stoffen und ihre Verwendung.**

(30) Priorität: **24.07.87 DE 3724555**

(43) Veröffentlichungstag der Anmeldung:
**25.01.89 Patentblatt 89/04**

(45) Bekanntmachung des Hinweises auf die Patenterteilung:
**23.09.92 Patentblatt 92/39**

(84) Benannte Vertragsstaaten:
**AT BE CH DE ES FR GB IT LI NL SE**

(56) Entgegenhaltungen:
EP-A- 0 045 996   EP-A- 0 096 210
EP-A- 0 100 508   DE-A- 1 619 816
DE-A- 1 805 693   US-A- 4 036 797

(73) Patentinhaber: **BASF Aktiengesellschaft**
**Carl-Bosch-Strasse 38**
**W-6700 Ludwigshafen(DE)**

(72) Erfinder: **Blum, Rainer**
**Bannwasserstrasse 58**
**W-6700 Ludwigshafen(DE)**

EP 0 300 388 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In neuerer Zeit sind eine Reihe von einkomponentigen Polyurethansystemen bekannt geworden, deren gemeinsames Merkmal es ist, daß die Grundstoffe, die nach ihrer Reaktion miteinander die verwendungsfertigen Polyurethansysteme bilden, durch Stabilisatoren in phasengetrennten Dispersionen vorliegen. Diese Dispersionen sind lagerstabil oder haben eine retardierte Reaktivität. Durch Erwärmung, Katalyse oder starke Scherung wird die Stabilisierung aufgehoben und die reaktiven Grundstoffe treten unter Bildung der bestimmungsgemäßen Polyurethankunststoffe miteinander in Reaktion.

Solche einkomponentigen stabilisierten Polyurethansysteme lassen sich durch Auswahl der Grundstoffe aus Polyisocyanaten und mit diesen Polyisocyanaten reaktiven Stoffen, für einen großen Anwendungsbereich abstimmen, z.B. für Haftkleber, harte Überzüge insbesondere auf Metallen, Verklebemassen, Antidröhnmassen, Nahtabdichtungsmassen und Unterbodenschutzmassen im Automobilbau, geformten Fertig- und Halbfertigerzeugnissen aus gegebenenfalls verstärkten und geschäumten Polyurethanwerkstoffen und viele andere.

Solche einkomonentigen Polyurethansysteme werden z.B. beschrieben in den Patentschriften DE 3 112 054, DE 3 261 670, DE 3 228 670, DE 3 228 724, DE 3 228 723, DE 3 325 735, DE 3 343 125, DE 3 343 124, DE 3 131 780, DE 3 230 757, DE 3 347 247, DE 3 403 497, DE 3 403 499, DE 3 403 500, DE 3 418 429, DE 3 418 430. Die in den genannten Patentschriften aufgeführten Polyurethansysteme sind nicht Gegenstand der vorliegenden Erfindung, sondern sind die Ausgangssysteme, in denen die viskositäsregulierenden Umsetzungsprodukte aus

(A) Monoaminen und/oder Polyaminen und/oder polymeren Stoffen mit mindestens einer Aminogruppe mit

(B) Monoisocyanaten und/oder Polyisocyanaten und/oder polymeren Stoffen mit mindestens einer Isocyanatgruppe

in situ hergestellt werden.

Einkomponentige Polyurethane sind für vielseitige Verwendung vorgesehen, z.B. zur Herstellung von Folien und Formkörpern und für Beschichtungen sowie zur Bildung von schalldämpfenden und gegen Korrosion und Steinschlag schützenden Überzügen auf Metallen, z.B. für Klimaschächte und Metalltüren. Weitere sehr wichtige Anwendungsgebiete sind die Verwendung als Metallverklebungsmittel, für Nahtabdichtungen und als Unterbodenschutz von Kraftfahrzeugen, sowie die Herstellung von Haftklebern.

Gemeinsam ist den meisten Anwendungen, daß die Massen, mit Methoden wie sie für die Verteilung von Flüssigkeiten bekannt sind, zu relativ dicken Schichten verarbeitet werden, z.B. mittels Schleuderguß zur Herstellung von Formkörpern, mittels Rakel- oder Streichauftrag auf Faservliese zur Herstellung von Kunstleder- und mittels Airless-Spritzauftrag zur Ausbildung der Unterbodenschutzbeläge an Automobilen.

In vielen Fällen ist es erwünscht für diese Anwendungen ein bestimmtes viskoses Verhalten der einkomponentigen Polyurethansysteme einzustellen, insbesondere z.B. ein sehr ausgeprägtes strukturviskoses bis thixotropes Fließverhalten, welches bewirkt, daß diese sich unter der Scherbeanspruchung des Auftrages leicht verteilen lassen, nach dem Auftrag, im Ruhezustand, aber sehr schnell eine hohe Viskosität aufbauen.

Übliche Methoden zur Einstellung des viskosen Verhaltens von Kunststoffdispersionen oder Lösungen bestehen im Zusatz von z.B. Füllstoffen organischer und/oder anorganischer Natur, Zusatz von hochquellenden, hochmolekularen Stoffen synthetischen oder natürlichen Ursprungs wie z.B. teilvernetzte Polyacrylsäure, teilvernetztes oder besonders hochmolekulares Polyacrylamid, modifizierte Cellulose, pflanzliche oder tierische Leime und Quellmittel, z.B. Gelatine oder Gummiarabicum, organisch modifizierte Montmorillonite, feinteiliges durch Flammhydrolyse hergestelltes amorphes Siliciumdioxid, Seifen mehrwertiger Metalle, wie Aluminiumoleat oder Calciumrhizinoleat u.a..

Die einkomponentigen Polyurethansysteme stellen sehr empfindliche Kombinationen dar aus den die bestimmungsgemäßen Polyurethankunststoffen bildenden Basiskomponenten, nämlich Polyisocyanat und mit diesem reaktionsfähigen, in der Regel mehrfunktionellen Stoffen z.B. Polyesterpolyole, Polyetherpolyole, Polyamine, Polyamide, Polymercaptane, Polycarbonsäuren und Stabilisatoren, die eine stabile Phasentrennung bewirken, sowie für die Isocyanatreaktion wirksame und notwendige Hilfsstoffe, insbesondere Katalysatoren.

Beim Versuch, die Viskosität der einkomponentigen Polyurethansysteme mit den oben beschriebenen Zuschlagstoffen einzustellen, trat eine Reihe von Schwierigkeiten auf.

Viele dieser Stoffe sind mit Polyisocyanaten reaktionsfähig und erhöhen den Isocyanatbedarf oder greifen in schwer kontrollierbarer Weise in das Äquivalenzverhältnis ein.

Andere werden nicht gut in die Polyurethanmatrix eingebaut, schwitzen aus, verschlechtern die mechanischen Eigenschaften und die in vielen Fällen erwünschte dekorative Oberfläche.

Ein schwerwiegender Hinderungsgrund für den Einsatz von Stoffen mit besonders großer Oberfläche, wie amorphem Siliciumdioxid oder Kieselsäurezubereitungen, ist die Beobachtung, daß die Wirkung von vielen Katalysatoren in Gegenwart dieser Stoffe, möglicherweise durch Adsorbtion, verschlechtert oder aufgehoben wird.

Aufgabe der vorliegenden Erfindung war es, ein viskositätsregulierendes, verdickendes, thixotropierendes, strukturviskositätsbildendes Prinzip aufzuzeigen, das die obengenannten Nachteile nicht aufweist.

Die Aufgabe konnte gelöst werden durch einkomponentige Polyurethansysteme aus Polyisocyanaten und mit den Polyisocyanaten reaktiven Stoffen, die durch Stabilisatoren in phasengetrennten Dispersionen vorliegen, enthaltend 0,01 bis 30 Gew.-%, bezogen auf die Gesamtmasse des einkomponentigen Polyurethansystems in situ hergestellte, isocyanatgruppenfreie Umsetzungsprodukte aus

(A) Monoaminen und/oder Polyaminen und/oder polymeren Stoffen mit mindestens einer Aminogruppe mit

(B) Mono- und/oder Polyisocyanaten und/oder polymeren Stoffen mit mindestens einer Isocyanatgruppe

als viskositätsregulierende Stoffe.

Die entstandenen Umsetzungsprodukte bewirken eine außerordentlich hohe Verdickung, die unter Scherbeanspruchung ab- und nach Beendigung der Scherung wieder aufgebaut wird. Der Effekt kann in einem weiten Bereich, durch Auswahl der Stoffe A) und B) und der Zusatzmengen, in Bezug auf die Verdickerwirkung und die Abhängigkeit der Viskosität von der Schergeschwindigkeit (Strukturviskosität) und der Dauer der Scherung (Thixotropierung), eingestellt werden.

Weiterhin ist es vorteilhaft, daß die entstandenen Umsetzungsprodukte mit den Polyurethankunststoffen verträglich sind und bei den, im allgemeinen bei der Überführung der einkomponentigen Polyurethansysteme in die bestimmungsgemäßen Polyurethankunststoffe, angewandten höheren Temperaturen auch durch chemische Reaktionen mit eingebaut werden, sowie die Reaktionen nicht stören und die Eigenschaften der Endprodukte nicht verschlechtern.

Die Komponenten werden in einem solchen Verhältnis zueinander eingesetzt, daß die entstehenden viskositätsregulierenden Stoffe isocyanatgruppenfrei sind.

In einer vorteilhaften Ausführungsform wird ein Monoamin mit einem Polyisocyanat oder einem Monoisocyanat umgesetzt.

In einer anderen Ausführungsform kann das Monoamin auch mit einer Mischung aus einem Monoisocyanat und einem Polyisocyanat zur Reaktion gebracht werden.

Eine weitere Ausführungsform sieht vor, daß ein Monoamin, zusammen mit einer Polyaminoverbindung, mit einem Polyisocyanat umgesetzt wird.

Es kann aber auch vorteilhaft sein, eine Mischung eines Monoamins und einer Polyaminverbindung mit einem Monoisocyanat oder einem Polyisocyanat oder einer Mischung aus einem Monoisocyanat und einem Polyisocyanat umzusetzen.

In einer weiteren vorteilhaften Ausführungsform wird eine Polyaminverbindung mit einem Monoisocyanat zur Reaktion gebracht. Es kann aber auch vorteilhaft sein, die Polyaminverbindung mit einer Mischung aus einem Monoisocyanat und einem Polyisocyanat zur Reaktion zu bringen.

Zu den einzelnen Reaktionskomponenten ist folgendes zu sagen:

Als Monoamine eignen sich insbesondere geradkettige oder verzweigtkettige aliphatische Monoamine mit gesättigten oder ungesättigten Gruppen, z.B. N-n-Alkenylamine, N-n-Alkylamine oder N-sec.-Alkylamine. Geeignet sind ferner cycloaliphatische Amine und Hydroxymonoamine. Beispielhaft seien als geeignete Monoamine erwähnt: Benzylamine, Cyclohexylamin, Ethylamin, n-Propylamin, Isopropylamin, n-Butylamin, sek.-Butylamin, tert.-Butylamin, n-Pentylamin, $\alpha$-Methylbutylamin, Ethylpropylamin, $\beta$-Ethylbutylamin und Methylbutylamin. Bevorzugt verwendet werden aliphatische und araliphatische Monoamine mit 1 bis 4 aliphatischen Kohlenstoffatomen, wie Benzylamin, Propylamin und tert.-Butylamin. Geeignete Hydroxyamine sind Monohydroxyamine, wie 2-Aminoethanol, 1-Aminoethanol, 2-Aminopropanol, 3-Aminopropanol, 1-Amino-2-propanol, 2-Amino-2-aminopentanol und Polyhydroxymonoamine, wie 2-Amino-2-methyl-1,3-propandiol und 2-Amino-2-ethyl-1,3-propan-diol. Alternativ können Gemische von einem oder mehreren Monoaminen und einem oder mehreren Monohydroxyaminen und/oder Polyhydroxymonoaminen verwendet werden.

Als Polyaminverbindungen eignen sich organische Verbindungen, die mehr als eine zur Reaktion mit Isocyanatgruppen befähigte Aminogruppe enthalten. Derartige Polyaminverbindungen sind beispielsweise solche mit primären oder sekundären Aminogruppen, wie Polyethylenimin, Hexamethylendiamin, 1,2-Propylendiamin, Tetrapropylenpentamin, vorzugsweise höhermolekulare Polyamidamine, wie sie z.B. durch Umsetzung von Dicarbonsäuren, wie dimerisierten Fettsäuren mit einem Überschuß an mehrwertigen Aminen zu erhalten sind und Aminzahlen von 80 bis 500, vorzugsweise 200 bis 420 und Viskositäten von 1 bis 80 mPas aufweisen.

Eine typische Verbindung dieser Art hat z.B. eine Aminzahl von 360 bei einer Viskosität von ca. 32 mPas.

Weiter geeignet sind Hydrazine und Hydrazide, z.B. Adipinsäuredihydrazid.

Als für die Umsetzung mit den Monoaminen und Polyaminverbindungen geeignete Polyisocyanate kommen Di- und Polyisocyanate in Frage, wie aliphatische, cycloaliphatische, araliphatische, aromatische und heterocyclische Polyisocyanate, z.B. Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und 1,4-diisocyanat sowie beliebige Gemische dieser Isomeren, 1-Isocyanato-3,3,5-tri-methyl-5-isocyanatomethyl-cyclohexan (DE-AS 12 02 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4- und/oder -4,4′-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat, Triphenylmethan-4,4′-, 4″-triisocyanat, Polyphenylen-polymethylen-polyisocyanate (erhalten durch Anilin-Formaldehyd-Kondensation und anschließende Phosgenierung nach den GB-PS 874 430 und 848 671), perchlorierte Arylpolyisocyanate (vgl. DE-AS 1 157 601), Carbodiimidgruppen aufweisende Polyisocyanate (vgl. DE-PS 1 092 007), Diisocyanate gemäß US-PS 3 492 330, Allophanatgruppen aufweisende Polyisocyanate (vgl. GB-PS 994 890, BE-PS 761 626 und NL-PA 7 102 524), Isocyanuratgruppen aufweisende Polyisocyanate (vgl. DE-PS 1 022 789, 1 222 067 und 1 027 394; DE-OS 1 929 034 und 2 004 048), Urethangruppen aufweisende Polyisocyanate (vgl. BE-PS 752 261 und US-PS 3 394 164), acrylierte Harnstoffgruppen aufweisende Polyisocyanate (vgl. DE-PS 1 230 778), Biuretgruppen aufweisende Polyisocyanate (vgl. DE-PS 1 101 394; GB-PS 889 050;
FR-PS 7 017 514), durch Telomerisationsreaktionen hergestellte Polyisocyanate (vgl. BE-PS 723 640), Estergruppen aufweisende Polyisocyanate (vgl. GB-PS 956 474 und 1 072 956; US-PS 3 567; DE-PS 1 231 688), oder auch Umsetzungsprodukte der oben genannten Isocyanate mit Acetalen (vgl. DE-PS 1 072 385).

Monoisocyanatverbindungen im Sinne der Erfindung sind aliphatische, aromatische und/oder cycloaliphatische Monoisocyanate. Die aliphatischen Monoisocyanate können beispielsweise bis zu 25 C-Atome aufweisen. Sowohl hier wie bei den aromatischen bzw. cycloaliphatischen Monoisocyanaten sind technisch leicht zugängliche und preiswerte Verbindungen besonders bevorzugt. Beispiele sind: Alkylisocyanat, Ethylisocyanat, Propylisocyanat, n-Butylisocyanat, Stearylisocyanat, sekundäre Alkylisocyanate wie tert.-Butylisocyanat und/oder aromatische Isocyanate wie Phenylisocyanat, 1-Naphthylisocyanat, Toluylisocyanate, Toluolsulfonylisocyanat oder auch cycloaliphatische Isocyanate wie Cyclohexylisocyanat.

Die Monoamine bzw. Polyaminverbindungen werden mit den Mono- und/oder Polyisocyanaten in solchen Mengenverhältnissen zur Reaktion gebracht, daß auf jede Isocyanatgruppe mindestens eine damit reaktionsfähige Aminogruppe kommt. Bevorzugt sind Umsetzungsprodukte, in welchen 5 bis 100 Äquivalent-% der Aminogruppen der Monoamine bzw. der Polyaminverbindung mit den Isocyanatgruppen des Mono- bzw. Polyisocyanats umgesetzt sind.

Die erfindungsgemäßen Umsetzungsprodukte werden in einer Menge von 0,01 bis 30 Gew.%, vorzugsweise 0,1 bis 1,5 Gew.%, bezogen auf die Gesamtmasse der einkomponentigen Polyurethansysteme eingesetzt.

Als vorteilhaft erwiesen haben sich zwei Herstellverfahren, nämlich die in situ Herstellung, d.h. die unmittelbare Herstellung in den fertigen oder teilfertigen einkomponentigen Polyurethansystemen oder in einem Teil der Flüssigphase durch aufeinanderfolgendes Einrühren von (A) und (B) oder (B) und (A), wobei die viskositätsregelnden Umsetzungsprodukte, auf Grund der hohen Reaktionsgeschwindigkeit von Isocyanat mit Amin, durch spontane chemische Reaktion sofort entstehen und der verdickende Effekt unmittelbar eintritt.

Weiter ist es möglich sehr hochverdickte Teilansätze herzustellen und das gewünschte viskose Verhalten durch Abmischen mit unverdickten Massen einzustellen.

Die einkomponentigen Polyurethansysteme sind für vielseitige Verwendung geeignet, z.B. zur Herstellung von Folien und Formkörpern, für Beschichtungen sowie zur Bildung von schalldämpfenden und gegen Korosion und Steinschlag schützenden Überzügen auf Metallen, z.B. für Klimaschächte und Metalltüren. Weitere sehr wichtige Anwendungsgebiete sind die Verwendungen als Metallverklebungsmittel, als Nahtabdichtungen und als Unterbodenschutz von Kraftfahrzeugen sowie zur Herstellung von Haftklebern.

Vergleichsbeispiel 1
(lösemittelarme Grundierung nach EP 100 507)

| | | |
|---|---|---|
| 90 g | eines Polyesterdiols auf Basis von Propylenoxid mit einer Molmasse von ca. 450, | |
| 140 g | eines Polyethertriols auf Basis von Glycerin und Propylenoxid mit einer Molmasse von ca. 420 | |
| 45 g | TiO$_2$-Pigmentweiß | |
| 47,5 g | Kreidepulver | |
| 2,5 g | Eisenoxidschwarz | |

wurden in einem gekühlten Dissolver bei 30 bis 35 °C dispergiert, dann wurde gekühlt auf ca. 20 °C und

| | | |
|---|---|---|
| 122 g | über Uretdionbindung dimerisiertes, feinpulveriges 2,4-Toluylendi-isocyan- | |

at eindispergiert.

| 2,8 g | Polyamidamin auf Basis von dimerisierter Leinölfettsäure mit einer Aminzahl von ca. 400 wurden bei ca. 20°C eindispergiert. Weiter wurden |
| 114 g | Xylol und |
| 0,2 g | Phenylquecksilberacetat |

eingerührt.

Man erhielt eine mit üblichen Spritzpistolen verspritzbare Masse, die nach 20 Min. bei 140°C eine graue Lackierung von guten mechanischen Eigenschaften ergab.

An senkrechten Flächen zeigten die Lackierungen bei Trockenschichtdicken >60$\mu$m Abläufer und die Lacke bildeten bei längerem Stehen schwer aufrührbare Sedimente.

Beispiel 1

Es wurde wie bei Vergleichsbeispiel 1 verfahren, jedoch wurden nachträglich noch

| 0,8 g | Diphenylmethandiisocyanat (Roh-MDI) eingerührt und unmittelbar danach |
| 0,63 g | Benzylamin. |

Der Lack ließ sich läuferfrei bis ca. 90$\mu$m Trockenschichtdicke verspritzen und bildete beim Stehen nur wenig Sediment.

Vergleichsbeispiel 2
(Automobilunterbodenschutzmasse nach EP 100 507)

| 140 g | eines Polyethertriols auf Basis von Glycerin und Proplenoxid mit einer Molmasse von ca. 420 |
| 300 g | eines Polyetherdiols auf Basis von Propylenoxid mit einer Molmasse von ca. 1000 |
| 50 g | Kreidepulver |
| 10 g | Titanweiß (Anatas) |
| 5 g | Eisenoxidgelb |

wurden in einem gekühlten Dissolver bei 30 bis 40°C dispergiert. Es wurde auf ca. 20°C gekühlt und

| 136 g | feinpulveriges, über Uretdionbindungen dimerisiertes, Toluylendiisocyanat eindispergiert, worauf |
| 2,2 g | Polyamidamin (wie in Beispiel 1) eindispergiert und |
| 3 g | 33 gew.%ige butylglykolische Lösung von Diazabiscyclooctan eingerührt wurde. |

Die erhaltene Masse konnte mit einer Hochdruckzerstäuberanlage bei ca. 200 bar auf die Unterseite von Automobilkarossen appliziert werden. Nach einer 20 min. Wärmebehandlung be 140°C wurde ein feinschaumiger Automobilunterbodenschutz ausgebildet.

An besonders beanspruchten Stellen, z.B. den Radhäusern, ist ein besonders dicker Auftrag bis ca. 7 mm erwünscht, dies war mit der Masse nicht möglich, da sie ab ca. 3 mm im Einbrennofen ablief.

Beispiel 2

Es wurde wie bei Vergleichsbeisiel 2 verfahren, aber es wurden nachträglich

| 5,31 g | Isopropylamin und danach |
| 12,15 g | ungereinigtes Diphenylmethandiisocyanat (Roh-MDI) |

eingerührt. Es bildete sich sofort eine Strukturviskiosität.

Die Masse blieb trotzdem unter der hohen Scherung der Spritzanlge gut spritzbar und war in Schichten bis ca. 20 mm standfest.

**Patentansprüche**

1. Einkomponentige Polyurethansysteme aus Polyisocyanaten und mit den Polyisocyanaten reaktiven Stoffen, die durch Stabilisatoren in phasengetrennten Dispersionen vorliegen, enthaltend 0,01 bis 30 Gew.%, bezogen auf die Gesamtmasse des einkomponentigen Polyurethansystems in situ hergestellte, isocyanatgruppenfreie Umsetzungsprodukte aus

   (A) Monoaminen und/oder Polyaminen und/oder polymeren Stoffen mit mindestens einer Aminogruppe mit

   (B) Mono- und/oder Polyisocyanaten und/oder polymeren Stoffen mit mindestens einer Isocyanatgruppe

   als viskositätsregulierende Stoffe.

2. Verwendung von einkomponentigen Polyurethansystemen nach Anspruch 1 für Beschichtungen auf gegebenenfalls vorbehandelten Metallgegenständen.

3. Verwendung von einkomponentigen Polyurethansystemen nach Anspruch 1 als Verklebemassen, Abdichtungsmassen oder Antidröhnmassen für Metallgegenständen.

4. Verwendung von einkomponentigen Polyurethansystemen nach Anspruch 1 als Unterbodenschutzmasse für Kraftfahrzeuge.

5. Verwendung von einkomponentigen Polyurethansystemen nach Anspruch 1 zur Herstellung von gegebenenfalls verstärkten Polyurethanwerkstoffen, Folien oder Formteilen.

6. Verwendung von einkomponentigen Polyurethansystemen nach Anspruch 1 zur Herstellung von Haftklebern und damit beschichtete Formteile, Folien oder flächiger Fasergebilde.

**Claims**

1. A one-component polyurethane system comprising polyisocyanates and substances reactive with the polyisocyanates, which are present in dispersions having separate phases as a result of stabilizers, containing from 0.01 to 30% by weight, based on the total mass of the one-component polyurethane system, of an isocyanate-free reaction product prepared in situ from
   (A) monoamines and/or polyamines and/or polymeric substances having one or more amino groups and
   (B) mono- and/or polyisocyanates and/or polymeric substances having one or more isocyanate groups
   as a viscosity-regulating substance.

2. Use of a one-component polyurethane system as claimed in claim 1 for coatings on metal articles which may or may not have been pretreated.

3. Use of a one-component polyurethane system as claimed in claim 1 as an adhesive material, a sealing compound or an antidrumming compound for metal articles.

4. Use of a one-component polyurethane system as claimed in claim 1 as an underbody protection material for motor vehicles.

5. Use of a one-component polyurethane system as claimed in claim 1 for the production of reinforced or unreinforced polyurethane materials, films or moldings.

6. Use of a one-component polyurethane system as claimed in claim 1 for the production of pressure-sensitive adhesives and moldings, films or sheet-like fibrous structures coated therewith.

**Revendications**

1. Systèmes polyuréthanniques à un seul composant, à base de polyisocyanates et de substances qui réagissent avec les polyisocyanates, qui se présentent sous la forme de dispersions à phases séparées par des agents de stabilisation, contenant de 0,01 à 30% en poids, par rapport à la masse totale du système polyuréthannique à un seul composant, de produits de réaction dépourvus de radicaux isocyanate, préparés in situ, à partir
   (A) de monoamines et/ou de polyamines et/ou de substances polymériques avec au moins un groupe amino et
   (B) de mono- et/ou polyisocyanates et/ou substances polymériques avec au moins un groupe isocyanate,
à titre de produits de régulation de la viscosité.

2. Utilisation de systèmes polyuréthanniques à un seul composant selon la revendication 1, en vue du revêtement d'objets en métaux éventuellement soumis à un traitement préalable.

3. Utilisation de systèmes polyuréthanniques à un seul composant suivant la revendication 1, à titre de matières de collage, de matières d'étanchement ou de matières insonorisantes pour des objets en métaux.

4. Utilisation de systèmes polyuréthanniques à un seul composant suivant la revendication 1, à titre de matières de protection du dessous de véhicules automobiles.

5. Utilisation de systèmes polyuréthanniques à un seul composant suivant la revendication 1, pour la fabrication d'articles moulés, de feuilles ou de matières polyuréthanniques, éventuellement renforcées.

6. Utilisation de systèmes polyuréthanniques à un seul composant suivant la revendication 1, pour la fabrication de colles de contact ou matières auto-adhésives et des produits fibreux en nappes, des feuilles ou des articles moulés qui en sont revêtus.